# EUROPÄISCHE PATENTANMELDUNG

(11) **EP 2 043 033 A1**
(43) Veröffentlichungstag der Anmeldung: **01.04.2009**
(21) Anmeldenummer: 08105160.9
(22) Anmeldetag: 27.08.2008
(51) Int. Cl.: G06Q 10/00

(54) **Verfahren zum Betreiben eines Infrastrukturnetzes**

(30) Priorität: 19.09.2007 DE 102007044793
(71) Anmelder: Siemens Aktiengesellschaft, 80333 München (DE)
(72) Erfinder: Berger, Michael Dr., 82110 Germering (DE); Fuchs, Florian, 80799 München (DE); Mieth, Sebastian, 81667 München (DE)

(57) **Zusammenfassung**

Die vorliegende Erfindung betrifft ein Verfahren, eine Vorrichtung, ein Infrastrukturnetz, eine Datenstruktur, ein Computerprogramm und einen Datenträger zum Betreiben eines Infrastrukturnetzes, insbesondere eines technischen Infrastrukturnetzes, wie zum Beispiel eines Stromnetzes, eines Schienennetzes oder eines Straßennetzes, unter Verwendung eines hierarchischen Graphen und eines Wissensrepräsentationsformalismus, wobei die in dem Wissensrepräsentationsformalismus erfassten Daten mit Elementen des hierarchischen Graphen verbunden sind und wobei der hierarchische Graph räumliche Beziehungen zwischen Einheiten des Infrastrukturnetzes abbildet.

## Beschreibung

Die vorliegende Erfindung betrifft ein Verfahren, eine Vorrichtung, ein Infrastrukturnetz, eine Datenstruktur, ein Computerprogramm und einen Datenträger zum Betreiben eines Infrastrukturnetzes, insbesondere eines technischen Infrastrukturnetzes, wie zum Beispiel eines Stromnetzes, eines Schienennetzes oder eines Straßennetzes.

### Hintergrund der Erfindung

Unter einem Infrastrukturnetz ist im Allgemeinen ein Satz verbundener struktureller Elemente eines Systems zu verstehen, wobei die strukturellen Elemente und die Verbindungen zwischen diesen einen Rahmen für die gesamte Struktur des Systems liefern. Im Folgenden wird der Begriff der Einheit eines Infrastrukturnetzes verwendet werden, wenn sowohl die strukturellen Elemente als auch die Verbindungen zwischen diesen gemeint sind. Technische Infrastrukturnetze umfassen zum Beispiel Versorgungsnetze wie Strom- oder Abwassernetze, Kommunikationsnetze oder Verkehrsnetze wie Schienen- oder Straßennetze. Um ein möglichst fehlerfreies und sicheres Funktionieren solcher (technischen) Infrastrukturnetze zu gewährleisten, müssen diese permanent überwacht und auf ihre Funktionstüchtigkeit überprüft werden. Dadurch wird es möglich, Probleme in einem Infrastrukturnetz schnell zu erkennen und bei Bedarf möglichst schnell einzugreifen, und die aufgetretenen Probleme möglichst zeitnah zu lösen und zu beheben. Um den Zustand eines Infrastrukturnetzes beurteilen zu können, muss eine Vielzahl an Informationen und Daten zu den Einheiten des Infrastrukturnetzes berücksichtigt werden. Diese Daten beschreiben zum Beispiel den Zustand und die Ausgestaltung der Einheiten (zum Beispiel Position, Abnutzung, Temperatur usw.) und/oder die äußeren Bedingungen um diese Einheiten (zum Beispiel Temperatur, Eigenschaften der Umwelt, Entfernungen usw.). Ferner können diese Daten auch zur Optimierung von Wartungsprozessen in einem Infrastrukturnetz einbezogen werden.

Diese Daten zu einem Infrastrukturnetz können statische oder Konstante, nicht veränderliche Daten und/oder variable Daten sein. Statische oder konstante Daten sind zum Beispiel Längenangaben bestimmter Schienenabschnitte, wenn ein Schienennetz als Infrastrukturnetz behandelt wird. Solche statischen oder konstanten Daten werden oft in Datenbanken gespeichert und verwaltet. Viele Eigenschaften oder Bedingungen, die ein Infrastrukturnetz betreffen, variieren jedoch. Zum Ermitteln der variablen Daten werden häufig Messvorrichtungen oder Messsysteme, wie zum Beispiel Sensoren, eingesetzt. Die Messvorrichtungen oder Messsysteme messen in der Regel die physikalischen Phänomene für zumindest einen Bereich des Infrastrukturnetzes und leiten dann die gewonnenen Messdaten bzw. Messwerte an zumindest eine das Infrastrukturnetz betreibende Einheit weiter. Mittels solcher gemessenen variablen Daten kann der Ist-Zustand, also der aktuelle Zustand des Infrastrukturnetzes abgeleitet werden. Sie werden dann entsprechend beim Überwachen und Warten und somit beim Betreiben des Infrastrukturnetzes berücksichtigt.

Für komplexe Anfragen zum Zustand eines Infrastrukturnetzes reicht es in der Regel nicht aus, die einzelnen Einheiten des Infrastrukturnetzes isoliert zu betrachten. In der Praxis hat es sich beim Betreiben von Infrastrukturnetzen mittlerweile herausgestellt, dass auch eine zusammenhängende Betrachtung von Informationen und Daten zu Einheiten des Infrastrukturnetzes wichtig ist, insbesondere zu Einheiten, die räumlich mit einander in Beziehung stehen. Dabei ist der Begriff "räumlich" als auf einen (mehrdimensionalen) Raum, Ort oder Bereich bezogen zu verstehen.

Ein Problem aus der Vielzahl von zu überwindenden Problemen, wenn es um eine zusammenhängende Betrachtung von Informationen zu räumlich mit einander in Beziehung stehenden Einheiten geht, ist in der Größe und der Komplexität der Infrastrukturnetze zu sehen. Die Infrastrukturnetze weisen große Mengen an zu handhabenden Einheiten auf, zu denen noch größere Mengen an Messdaten und anderen (statischen und variablen) Daten anfallen. Betrachtet man beispielhaft das Deutsche Schienennetz, so umfasst dieses etwa 6000 Personenbahnhöfe und 74000 Kreuzungen und Weichen. Des Weiteren sind die Infrastrukturnetze auch sehr komplex in Ihrem Aufbau. Aus diesen Gründen ist eine effektive, zusammenhängende Betrachtung des Infrastrukturnetzes oft nicht möglich. Insbesondere besteht der Wunsch, automatische Beantwortung flexibel gestaltbarer Anfragen in Bezug auf statische und/oder variable Daten zum Infrastrukturnetz zu ermöglichen. Da aber schon eine zusammenhängende Betrachtung des Infrastrukturnetzes, die den Startpunkt für solche Anfragen bedeutet, oft nicht möglich ist, sind auch solche flexibel gestaltbarer Anfragen oft nicht durchführbar. Dieses sind einige allgemeine Probleme, die allerdings nicht als die vorliegende Erfindung beschränkend aufzufassen sind, da die vorliegende Erfindung auch viele weitere Aspekte aufweist. Einige von denen werden noch im Folgenden erwähnt werden.

Die allgemein bekannten Verfahren beschränken sich in der Regel auf ein bloßes Kombinieren von Daten, die in einem gegebenen Infrastrukturnetz anfallen. In der Regel werden Datenbanken als Mittel der Wahl zur Handhabung (Aufbewahrung, Verwaltung, und/oder Abfrage) von (statischen und/oder variablen) Daten zu einem Infrastrukturnetz eingesetzt. Datenbanken können allerdings in der Regel nur für vordefinierte Anwendungen und für bestimmte und vordefinierte Infrastrukturnetze konzipiert werden. Daher sind nur Probleme für spezielle Anwendungsfälle mittels solcher Datenbanken lösbar. Eine generische Umsetzung, die jede Art von Infrastrukturnetzen und jede Art von Daten behandeln kann, können Anwendungen, die auf der Nutzung von Datenbanken beruhen, jedoch nicht bieten.

### Zusammenfassung der Erfindung

Die Aufgabe der vorliegenden Erfindung liegt darin, ein verbessertes Betreiben eines Infrastrukturnetzes bereitzustellen.

Die Aufgabe wird gelöst durch ein Verfahren mit Merkmalen des Anspruchs 1, durch eine Vorrichtung mit Merkmalen des Anspruchs 4, durch ein Infrastrukturnetz mit Merkmalen des Anspruchs 7, durch eine Datenstruktur mit Merkmalen des Anspruchs 8 und durch ein Computerprogramm mit Merkmalen des Anspruchs 9 und durch einen Datenträger mit Merkmalen des Anspruchs 10.

Die Aufgabe wird mittels eines Verfahrens zum Betreiben eines Infrastrukturnetzes gelöst, wobei das Verfahren die Schritte aufweist:

Bereitstellen eines hierarchischen Graphen, der das Infrastrukturnetz und räumliche Beziehungen von Einheiten des Infrastrukturnetzes abbildet; und

Bereitstellen eines Wissensrepräsentationsformalismus, wobei der Wissensrepräsentationsformalismus (statische und/oder variable) Daten zu dem Infrastrukturnetz erfasst, wobei die in dem Wissensrepräsentationsformalismus erfassten (statischen und/oder variablen) Daten mit Elementen des hierarchischen Graphen verbunden sind.

Des Weiteren wird die Aufgabe mittels einer Vorrichtung zum Betreiben eines Infrastrukturnetzes gelöst, wobei die Vorrichtung aufweist:
eine erste Datenhandhabungseinrichtung, die derart ausgebildet ist, einen hierarchischen Graphen, der das Infrastrukturnetz und räumliche Beziehungen von Einheiten des Infrastrukturnetzes abbildet, zu handhaben; und eine zweite Datenhandhabungseinrichtung, die derart ausgebildet ist, einen Wissensrepräsentationsformalismus zu handhaben und wobei der Wissensrepräsentationsformalismus ausgebildet ist, (statische und/oder variable) Daten zu dem Infrastrukturnetz zu erfassen, wobei die in dem Wissensrepräsentationsformalismus erfassten (statischen und/oder variablen) Daten mit Elementen des hierarchischen Graphen verbunden sind.

Hier ist anzumerken, dass die erste Datenhandhabungseinrichtung und die zweite Datenhandhabungseinrichtung in einer übergeordneten Datenhandhabungseinrichtung enthalten sein können oder von zumindest einen übergeordneten Datenhandhabungseinrichtung verwaltet werden können. Des Weiteren kann die erste Datenhandhabungseinrichtung und die zweite Datenhandhabungseinrichtung dieselbe Datenhandhabungseinrichtung darstellen. Weitere mögliche Variationen hinsichtlich der Umsetzung werden dem Fachmann ersichtlich sein, daher werden diese im Folgenden nicht detaillierter beschrieben.

Ferner wird die Aufgabe mittels eines Infrastrukturnetzes mit der vorstehend skizzierten und nachfolgend detaillierter beschriebenen Vorrichtung und mit Einheiten, die strukturelle Elemente und Verbindungen zwischen den strukturellen Elementen umfassen, gelöst.

Die Aufgabe wird auch mittels einer Datenstruktur für ein Verfahren zum Betreiben eines Infrastrukturnetzes mit einem hierarchischen Graphen und einem Wissensrepräsentationsformalismus gelöst, wobei:
der hierarchische Graph ausgebildet ist, das Infrastrukturnetz und räumliche Beziehungen von Einheiten des Infrastrukturnetzes abzubilden; und
der Wissensrepräsentationsformalismus ausgebildet ist, (statische und/oder variable) Daten zu dem Infrastrukturnetz zu erfassen, wobei die in dem Wissensrepräsentationsformalismus erfassten (statischen und/oder variablen) Daten mit Elementen des hierarchischen Graphen verbunden sind.

Zusätzlich wird die Aufgabe durch ein Computerprogramm gelöst, das eine Kodierung aufweist, die ausgebildet ist, Schritte des vorstehend skizzierten und nachfolgend detaillierter beschriebenen Verfahrens auszuführen. Das Computerprogramm kann optional auf einem Datenträger gespeichert sein.

Ferner wird die Aufgabe durch einen Datenträger, der das vorstehend skizzierte Computerprogramm aufweist

Die Idee der Erfindung liegt darin, durch das Verwenden des hierarchischen Graphen und des Wissensrepräsentationsformalismus, die miteinander verbunden sind, eine effiziente Berücksichtigung räumlicher Zusammenhänge zwischen Einheiten des Infrastrukturnetzes zu ermöglichen. Beide Strukturen können eine ausdrucksstarke und effektive Repräsentation der (statischen und variablen) Daten zum Infrastrukturnetz und seinen Einheiten bieten. Somit können viele der beim Betreiben von Infrastrukturnetzen entstehenden Probleme, wie zum Beispiel vorstehend skizziert, gelöst werden.

Der hierarchische Graph erlaubt eine Abbildung bzw. Darstellung eines Infrastrukturnetzes, die von der Art des Infrastrukturnetzes unabhängig ist, und erlaubt ferner verschiedene Detailebenen des Infrastrukturnetzes zu repräsentieren. Die Elemente (zum Beispiel Knoten und Kanten) des hierarchischen Graphen sind derart konzipiert, dass sie jeweils wiederum einen weiteren Graphen abbilden, repräsentieren und damit abstrahieren können. Abfragen können somit je nach Bedarf auf verschiedenen Detailebenen des Graphen durchgeführt werden, was nicht nur ein flexibles sondern ein schnelles Abfragen von Zusammenhängen in einem Infrastrukturnetz erlaubt. Angesichts der großen Datenmengen, die es zu bewältigen gilt, wird so eine schnelle und möglichst wenig Rechenzeit in Anspruch nehmende Lösung geboten. Die oben aufgelisteten Eigenschaften kommen noch deutlicher durch Einsatz des Wissensrepräsentationsformalismus zur Geltung. Gemäß der vorliegenden Erfindung kann jede Art eines Wissensrepräsentationsformalismus (zum Beispiel Regeln, Frames (Rahmen), Logik, Semantische Netze usw.) verwendet werden. Allgemein ist ein Wissensrepräsentationsformalismus derart ausgebildet, dass es Problemwissen (zum Beispiel Wissen zu Einheiten des Netzes, statische und/oder variable Daten) hinreichend genau abbildet und einem Inferenzmechanismus (zum Beispiel dem Mechanismus zur Verarbeitung des Wissens/ der Daten) ermöglicht, effizient zur Lösung eines konkreten Problems/ einer Anfrage beizutragen.

Es wird somit ein generischer Ansatz angeboten, der eine einheitliche und leicht wartbare Repräsentation der Gesetzmäßigkeiten der Infrastruktur bzw. der Fusion von variablen und/oder statischen Daten für die Anfragebearbeitung bietet.

Vorteilhafte Weiterbildungen der vorliegenden Erfindung finden sind in den Unteransprüchen beispielhaft erörtert.

Gemäß eines Ausführungsbeispiels kann das oben skizzierte Verfahren das Ausführen zumindest einer Anfrage in Bezug auf das Infrastrukturnetz unter Verwendung des hierarchischen Graphen und des Wissensrepräsentationsformalismus aufweisen, wobei der hierarchische Graph aus einer Menge von Elementen, welche die Einheiten des Infrastrukturnetzes abbilden, aufgebaut ist. Das Ausführen der zumindest einen Anfrage geschieht auf eine sehr effiziente Weise - durch eine flexible Betrachtung der Zusammenhänge der räumlichen Beziehungen der Einheiten des Infrastrukturnetzes und durch Einbeziehen des Wissens (zum Beispiel der statischen und/oder variablen Daten) über die Einheiten des Infrastrukturnetzes.

Das Ausführen der zumindest einen Anfrage kann aufweisen:
Auswählen von einer Teilmenge von Elementen aus der Menge von Elementen des hierarchischen Graphen, die für die zumindest eine Anfrage relevant sind, unter Verwendung des hierarchischen Graphen und/oder des Wissensrepräsentationsformalismus; und
Durchführen der zumindest einen Anfrage unter Verwendung der ausgewählten Teilmenge von Elementen und unter Verwendung des hierarchischen Graphen und/oder des Wissensrepräsentationsformalismus.

Durch das Einsetzen des hierarchischen Graphen und/oder des Wissensrepräsentationsformalismus kann eine schnelle und effektive Vorauswahl von Einheiten des Infrastrukturnetzes, die die Anfrage(n) interessant sind, getroffen werden. Dabei werden diese Einheiten wissensbasiert durch eine zusammenhängende Betrachtung ihrer räumlichen Beziehungen ausgewählt.

Die oben skizzierte Vorrichtung kann ausgebildet sein, weitere Einrichtungen bzw. Mittel bereitzustellen, die das Durchführen des vorstehend skizzierten und nachstehend detailliert beschriebenen Verfahrens erlauben. Eine entsprechende Ausgestaltung der Vorrichtung kann aus der nachfolgenden Beschreibung der Erfindung abgeleitet werden.

Gemäß einem Ausführungsbeispiel kann die Vorrichtung eine Anfragenausführungseinrichtung aufweisen, die dazu ausgebildet ist, zumindest eine Anfrage in Bezug auf das Infrastrukturnetz unter Verwendung des hierarchischen Graphen und des Wissensrepräsentationsformalismus auszuführen, wobei der hierarchische Graph aus einer Menge von Elementen, welche die Einheiten des Infrastrukturnetzes abbilden, aufgebaut ist.

Dabei kann die Anfragenausführungseinrichtung aufweisen:
Auswahlvorrichtung, die dazu ausgebildet ist, eine Teilmenge von Elementen aus der Menge von Elementen des hierarchischen Graphen, die für die zumindest eine Anfrage relevant sind, unter Verwendung des hierarchischen Graphen und/oder des Wissensrepräsentationsformalismus auszuwählen; und Durchführungseinrichtung, die dazu ausgebildet ist, die zumindest eine Anfrage unter Verwendung der ausgewählten Teilmenge von Elementen und weiterhin unter Verwendung des hierarchischen Graphen und/oder des Wissensrepräsentationsformalismus durchzuführen.

Somit betrifft die vorliegende Erfindung ein Verfahren, eine Vorrichtung, ein Infrastrukturnetz, eine Datenstruktur, ein Computerprogramm und einen Datenträger zum Betreiben eines Infrastrukturnetzes, insbesondere eines technischen Infrastrukturnetzes, wie zum Beispiel eines Stromnetzes, eines Schienennetzes oder eines Straßennetzes, unter Verwendung eines hierarchischen Graphen und eines Wissensrepräsentationsformalismus, wobei die in dem Wissensrepräsentationsformalismus erfassten Daten mit Elementen des hierarchischen Graphen verbunden sind und wobei der hierarchische Graph räumliche Beziehungen zwischen Einheiten des Infrastrukturnetzes abbildet.

Auf diese Art und Weise bietet die vorliegende Erfindung eine generische Repräsentation von Infrastrukturnetzen und den dazugehörigen Daten. Des Weiteren wird eine flexible und effiziente Möglichkeit der Abfrage von Zusammenhängen in einem Infrastrukturnetz und von Informationen zum gegenwärtigen Zustand des Infrastrukturnetzes angeboten.

### Kurze Beschreibung der Zeichnungen

Im Folgenden wird die Erfindung detailliert mit Bezug auf die Ausführungsbeispiele gemäß den anhängenden Figuren schematisch beschrieben, in denen:
- Fig. 1: einen hierarchischen Graphen zeigt, der ein Infrastrukturnetz und räumliche Beziehungen der Einheiten des Infrastrukturnetzes gemäß einem Ausführungsbeispiel der vorliegenden Erfindung abbildet;
- Fig. 2: ein Flussdiagramm mit Schritten des Verfahrens gemäß einem Ausführungsbeispiel der vorliegenden Erfindung zeigt; und
- Fig. 3: für eine Anfrage ausgeführte Abarbeitung eines Graphalgorithmus auf dem Graphen gemäß einem Ausführungsbeispiel der vorliegenden Erfindung zeigt;
- Fig. 4: beispielhaft eine starke Vereinfachung des deutschen Schienennetz darstellt, das als hierarchi- scher Graph gemäß der vorliegenden Erfindung modelliert ist.

### Beschreibung der Ausführungsbeispiele

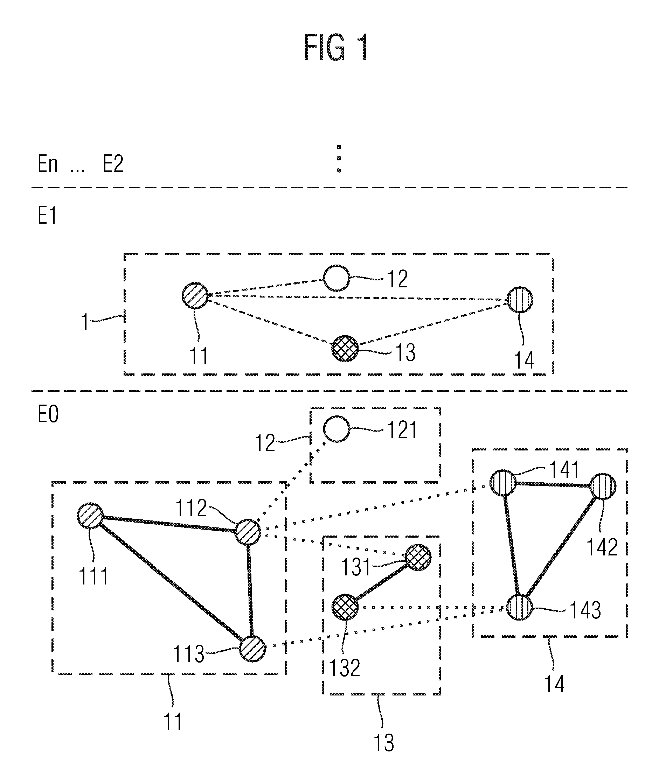

Fig. 1 zeigt einen hierarchischen Graphen, der ein Infrastrukturnetz und räumliche Beziehungen der Einheiten des Infrastrukturnetzes gemäß einem Ausführungsbeispiel der vorliegenden Erfindung abbildet.

Die in Fig. 1 dargestellte Infrastruktur kann zum Beispiel eine Schieneninfrastruktur sein. In einem solchen Falle können die Elemente (Knoten und Kanten) des hierarchischen Graphen, die keine Untergraphen enthalten, beispielsweise wie folgt aussehen: die Weichen können die Knoten und die Gleisstücke die Kanten des die Schieneninfrastruktur repräsentierenden hierarchischen Graphen sein. In einer Schieneninfrastruktur werden Messwerte mit Ortsbezug (variable Daten) unter anderem von Messsystemen an Schienen und Weichen geliefert. Sie können zum Beispiel Belastung der Schiene durch darüberfahrende Züge, Detektion von überhitzten Achslagern darüberfahrender Züge oder Schaltgeschwindigkeit von Weichen angeben. Andere Messsysteme bzw. Messvorrichtungen können sich auf den Zügen befinden und Messwerte zu den Schienen, über die sie fahren, produzieren. Zusätzlich können auch externe Daten (Daten von externen, nicht im System der Infrastruktur eingebundenen Messvorrichtungen bzw. Messsystemen), wie zum Beispiel Niederschlag und Temperatur, von Wetterdiensten geliefert werden.

Ist die in Fig. 1 dargestellte Infrastruktur ein Stromnetz, so können die Elemente (Knoten und Kanten) des hierarchischen Graphen beispielsweise folgende Informationen aufweisen: die Knoten können zum Beispiel Kraftwerke, Verteiler usw. repräsentieren, und die Stromleitungen können die Kanten des Infrastrukturgraphen darstellen. Die ortsbezogenen Messungen (die variablen Daten) können in einem solchen Infrastrukturnetz zum Beispiel Überlastung und Verschleiß von Leitungen, Wetterbedingungen wie Schneefall, Frost, Stürme sowie Naturkatastrophen wie Waldbrände und Überflutungen sein.

Ein weiteres Beispiel für eine in Fig. 1 dargestellte Infrastruktur könnte ein Straßennetz sein. Der hierarchische Infrastrukturgraph würde für das Straßennetz zum Beispiel Kreuzungen als Knoten und Straßen als Kanten darstellen. Ortsbezogene Messdaten, das heißt variable Daten, wären in diesem Fall zum Beispiel für Staus relevante Informationen, Wetterbedingungen wie Schneefall, Regen oder Frost, Straßensperrungen, Objekte auf der Straße usw.

Auch Gebäudepläne, beispielsweise von Flughäfen oder Bahnhöfen, stellen Beispiele für Infrastrukturnetze dar. Hier könnten vordefinierte Punkte und Räume Knoten und Gänge Kanten im Infrastrukturgraphen darstellen. Ortsbezogene Messdaten wären zum Beispiel Anzahl der verkehrenden Personen, Temperatur, Luftqualität, Feuer usw. Für solche Infrastrukturen kann auch die Dreidimensionalität des Infrastrukturgraphen zum Tragen kommen, um zum Beispiel unterschiedliche Stockwerke modellieren zu können. Weitere Anwendungsbereiche könnten auch Megacities darstellen.

Des Weiteren können auch Gerätekomponenten (zum Beispiel Züge) als Infrastrukturnetze dargestellt werden. Hier könnten die Knoten den Bauteilen des Geräts (zum Beispiel technischen Geräten des Zugs und der Waggons, auf einer höheren Ebene entsprechen sie dem Zug / Waggons selbst) repräsentieren. Die Kanten wiederum Könnten deren Verbindungen darstellen. Relevante Messdaten als variable Daten wären hier zum Beispiel Temperatur der Einzelteile, Ölstand des Antriebs oder Auslastung von Waggons.

Im Weiteren wird die Fig. 1 ohne Bezug auf ein konkretes Beispiel abstrakt erläutert. Es versteht sich von selbst, dass die oben dargestellten Infrastrukturnetze nur beispielhaft ausgeführt sind und dass durch die vorliegende Erfindung eine Vielzahl verschiedenartiger Infrastrukturnetze gehandhabt werden kann. Die Anzahl der Ebenen des hierarchischen Graphen entspricht der Anzahl der Abstraktionsstufen, die ein Infrastrukturnetz aufweist. In Fig. 1 sind n+1 Ebenen En ... E2, E1 und E0 und somit n+1 Abstraktionsstufen des hierarchischen Graphen gegeben. Die Elemente (Knoten und Kanten) des hierarchischen Graphen sind derart konzipiert, dass sie jeweils einen weiteren Graphen abbilden und somit abstrahieren können. Dabei entspricht eine Ebene des hierarchischen Graphen einer Abstraktionsstufe des Infrastrukturnetzes.

Der Knoten 1 der Ebene E1 weist einen Untergraphen aus Knoten 11, 12, 13 und 14 und mit unterbrochenen Linien gezeichneten Kanten zwischen diesen auf. Die Knoten 11, 12, 13 und 14 enthalten selbst Untergraphen und werden in der Ebene E0, die diese Knoten beschreibt und zugleich die detaillierteste Abstraktionsstufe des Infrastrukturnetzes darstellt, genauer, zusammen mit Ihren Untergraphen dargestellt. In der Ebene E0 weist der Knoten 11 als Untergraphen die Unterknoten 111, 112 und 113 und die mit durchgezogenen Linien gezeichneten Kanten zwischen diesen auf. Der Knoten 12 umfasst in der Ebene E0 den Unterknoten 121 als Untergraphen; der Knoten 13 die Unterknoten 131 und 132 und die mit durchgezogenen Linien gezeichneten Kanten zwischen diesen; der Knoten 14 umfasst die Unterknoten 141, 142 und 143 mit den mit durchgezogenen Linien gezeichneten Kanten als Untergraphen. Die gestrichelt eingezeichneten Kanten der Ebene E1 weisen als untergeordnete Kanten diejenigen in der Ebene E0 mit gestrichelten Linien eingezeichneten Kanten auf, welche die Untergraphen der entsprechenden Endknoten verbinden. Zum Beispiel werden die zwei Kanten, welche die Unterknoten 112 und 141, 113 und 143 der Ebene E0 verbinden, durch die Kante zwischen den Knoten 11 und 14 der Ebene E1 abstrahiert.

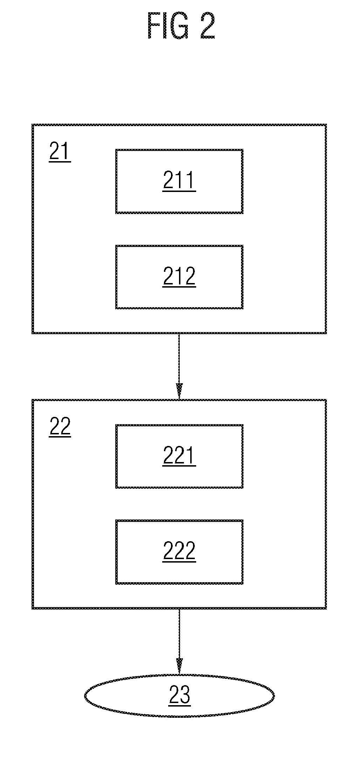

In Fig. 2 zeigt ein Flussdiagramm mit Schritten des Verfahrens gemäß einem Ausführungsbeispiel der vorliegenden Erfindung.

In Schritt 21 werden die Daten zum Infrastrukturnetz bereitgestellt. Der Schritt 21 umfasst zum einen das Bereitstellen 211 eines hierarchischen Graphen, der das Infrastrukturnetz und räumliche Beziehungen von Einheiten des Infrastrukturnetzes, wie am Beispiel der Fig. 1 ausgeführt, abbildet.

Des Weiteren umfasst der Schritt 21 das Bereitstellen 212 eines Wissensrepräsentationsformalismus, der statische und/oder variable Daten zu dem Infrastrukturnetz erfasst. Diese statischen Daten können allgemeine Beschreibunden der Einheiten des Infrastrukturnetzes sein, die die Eigenschaften und/oder die Umgebung dieser Einheiten spezifizieren. Die variablen Daten können zum Beispiel Messdaten sein, die von internen oder externen, mobilen oder fest installierten (statischen) Messvorrichtungen oder Meßsystemen dem Infrastrukturnetz bereitgestellt werden. Die im Wissensrepräsentationsformalismus erfassten statischen und/oder variablen Daten sind mit den Elementen des hierarchischen Graphen verbunden. Wie bereits oben erwähnt, kann gemäß der vorliegenden Erfindung jede bekannte Art von Formalismen zur Wissensrepräsentation eingesetzt werden, zum Beispiel Beschreibungslogik oder Regelformalismus.

Die Reihenfolge der Durchführung der Schritte 211 und 212 ist beliebig. Es ist auch möglich, die beiden Schritte auf geeignete Art und Weise zu kombinieren. Die Kombinationsmöglichkeiten können bei einer konkreten Implementierung der vorliegenden Erfindung ersichtlich werden.

Sind die Daten (der hierarchische Graph und die durch den Wissensrepräsentationsformalismus strukturierten variablen und/oder statischen Daten) bereitgestellt, so können Anfragen in Bezug auf das Infrastrukturnetz unter Verwendung des hierarchischen Graphen und des Wissensrepräsentationsformalismus gestartet werden. Das Stellen der Anfragen wird durch den Schritt 22 repräsentiert.

Der Schritt 22 umfasst allgemein zwei Unterschritte 221 und 222. In Schritt 221 wird eine Menge von Elementen (bzw. Teilmenge der (Gesamt-) Menge von Elementen) des hierarchischen Graphen bzw. Einheiten des Infrastrukturnetzes (aus der (Gesamt-) Menge von Elementen) ausgewählt, die für zumindest eine gestellte Anfrage relevant ist. Dabei werden die Daten des hierarchischen Graphen und/oder des Wissensrepräsentationsformalismus verwendet. Es können zum Beispiel anhand des hierarchischen Graphen und/oder anhand der durch den Wissensrepräsentationsformalismus repräsentierten Daten Kriterien für die auszuwählende Menge von Elementen des hierarchischen Graphen bestimmt werden oder die Elemente des hierarchischen Graphen und/oder die Daten des Wissensrepräsentationsformalismus werden auf eine erste Menge an Kriterien überprüft und ausgewählt.

In Schritt 222 wird die zumindest eine Anfrage in Bezug auf die in Schritt 221 ausgewählte Menge von Elementen durchgeführt, wobei bei der Durchführung der Anfrage der hierarchische Graph und/oder des Wissensrepräsentationsformalismus ähnlich wie in Schritt 221 verwendet werden.

Insgesamt werden in Schritten 21 und 22 die durch den hierarchische Graphen und/oder durch den Wissensrepräsentationsformalismus dargestellten Gesetzmäßigkeiten zwischen den statischen und/oder variablen Daten und den räumlichen Beziehungen der Einheiten verwendet, um Zusammenhänge im Infrastrukturnetz zu erkennen, das heißt umfassende Anfragen zu ermöglichen. Sowohl zur Ausführung des Schrittes 221 als auch zur Ausführung des Schrittes 222, können Kriterien gesetzt werden, die die Elemente des hierarchischen Graphen und/oder die Daten, die durch den Wissensrepräsentationsformalismus dargestellt werden, erfüllen müssen. Die Kriterien, die für den Schritt 221 gesetzt werden, können von den Kriterien des Schritts 222 unterschiedlich sein, oder mit diesen eine Schnittmenge bilden. Die Daten 23 zeigen das Ergebnis des Schrittes 22 an.

Im Folgenden werden zwei konkretere Beispiele in Bezug auf den in Fig. 2 gezeigten Schritt 22 und seine Unterschritte 221 und 222 erläutert.

Gemäß einem Ausführungsbeispiel wird in Schritt 221 der hierarchische Infrastrukturgraph verwendet, um die für eine Anfrage relevanten Einheiten des Infrastrukturnetzes bzw. Elemente des Graphen auszuwählen. Da die Elemente des Graphen mit den diese Elemente beschreibenden statischen und/oder variablen Daten im Wissensrepräsentationsformalismus verbunden sind, werden dadurch indirekt auch diese Daten vorausgewählt.

Als ein Beispiel aus dem Schienenverkehr könnte die Anfrage gestellt werden, ob es auf der ICE-Strecke von München nach Hamburg in der vergangenen Nacht zu Frost gekommen ist. Anstatt nun für alle Infrastruktureinheiten (das heißt Gleisabschnitte) zu prüfen, ob dies der Fall war, wird zunächst ein Graphalgorithmus auf den Infrastrukturgraphen gestartet, was dem Schritt 221 der Fig. 2 entspricht. Dadurch werden die Gleisabschnitte (diejenigen Einheiten des Infrastrukturnetzes) ermittelt, die auf der relevanten Strecke liegen. Anschließend muss nur noch für diese ermittelten Gleisabschnitte, die die ausgewählte Menge von Einheiten des Infrastrukturnetzes repräsentieren, abgeleitet werden, ob es zu Frost gekommen ist. Dieses wird in Schritt 222 gemacht. Dabei können vorhandene Messwerte und Informationen verwendet werden, die durch den Wissensrepräsentationsformalismus strukturiert und zusammenhängend dargestellt sind. Durch den Schritt 221 wird die Menge der dafür zu betrachtenden Daten erheblich reduziert. In Schritt 222 kann der verwendete Graphalgorithmus weiterhin aufgrund der hierarchischen Struktur des verwendeten Graphen zielgerichtet irrelevante Bereiche des Graphen frühzeitig aussortieren und sich somit auf relevante Bereiche des Graphen konzentrieren. Dadurch wird es möglich, sehr große Datenmengen und sehr große hierarchische Graphen zu effizient zu verarbeiten.

Gemäß einem weiteren Ausführungsbeispiel werden in Schritt 221 Messwerte (variable Daten), die den verschiedenen Infrastrukturelementen zugeordnet sind, zur Ableitung von Gewichten für die Kanten des Infrastrukturgraphen verwendet. Auf dieser Basis können dann in Schritt 222 Untergraphen mit bestimmten Eigenschaften mittels Graphalgorithmen identifiziert werden, wie zum Beispiel kürzeste Wege.

Betrachtet man den Schienenverkehr als das Infrastrukturnetz, könnte das Ziel sein, die risikoärmste Strecke zwischen zwei Stationen A und B zu finden. Dazu wird in Schritt 221 für jeden Gleisabschnitt anhand der vorhandenen Informationen bzw. variablen und/oder statischen Daten, wie zum Beispiel Abnutzung, geographische Lage und Wetterbedingungen ein Risikolevel abgeleitet und als Gewicht der entsprechenden Kante im Graphen zugeordnet. Dieses wird unter Verwendung des Wissensrepräsentationsformalismus erreicht. Daraus entsteht ein gewichteter hierarchischer Graph, auf dem nun in Schritt 222 der kürzeste Weg zwischen den Stationen A und B gesucht wird. Da die den Kanten des hierarchischen Graphen zugewiesenen Gewichte die jeweiligen Risikolevels angeben, entspricht der kürzeste Pfad 23 dabei dem risikoärmsten Pfad.

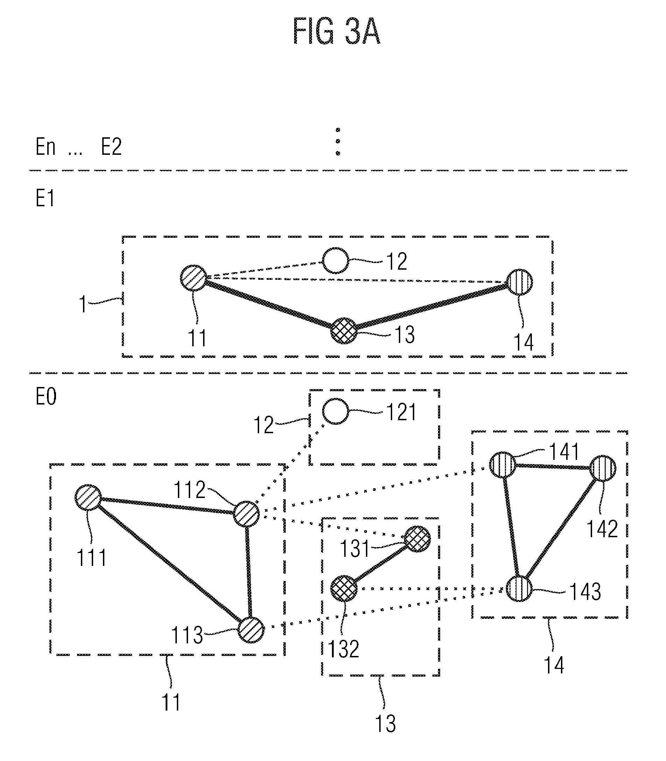

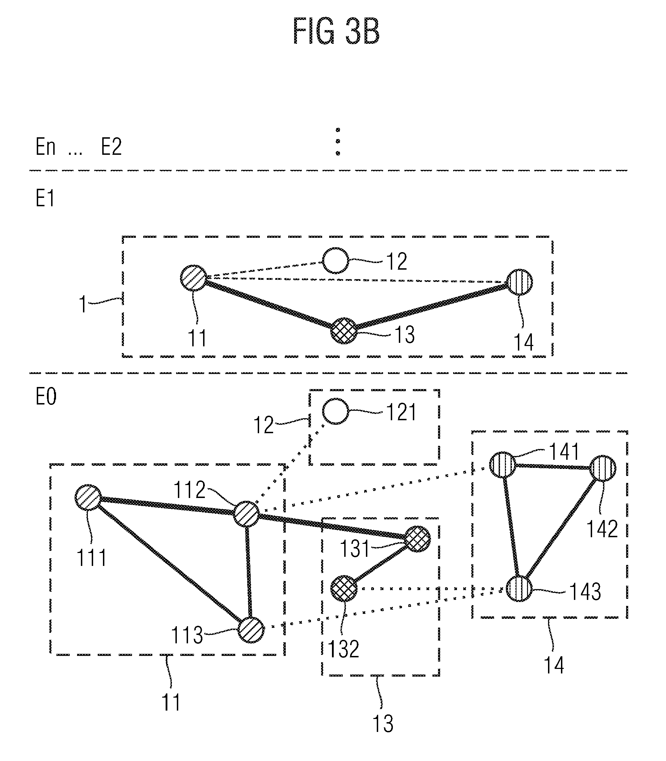

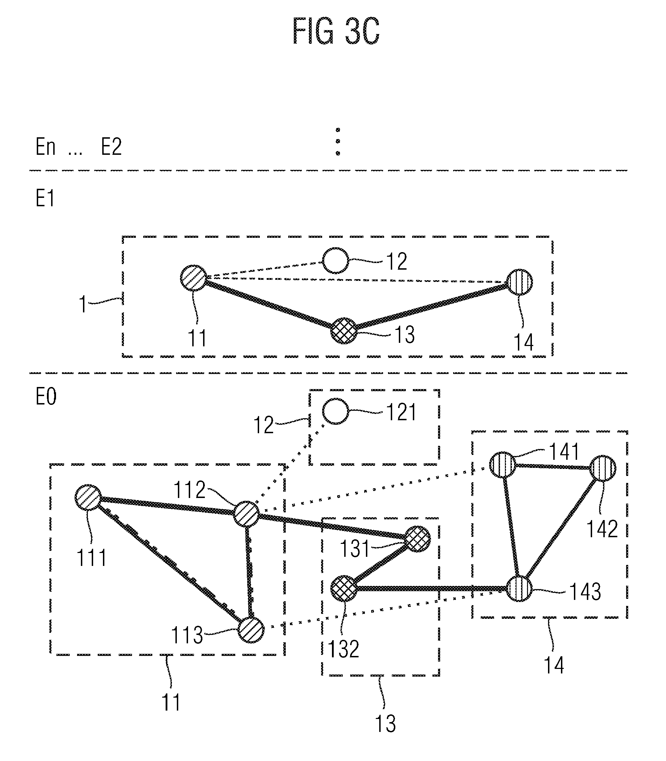

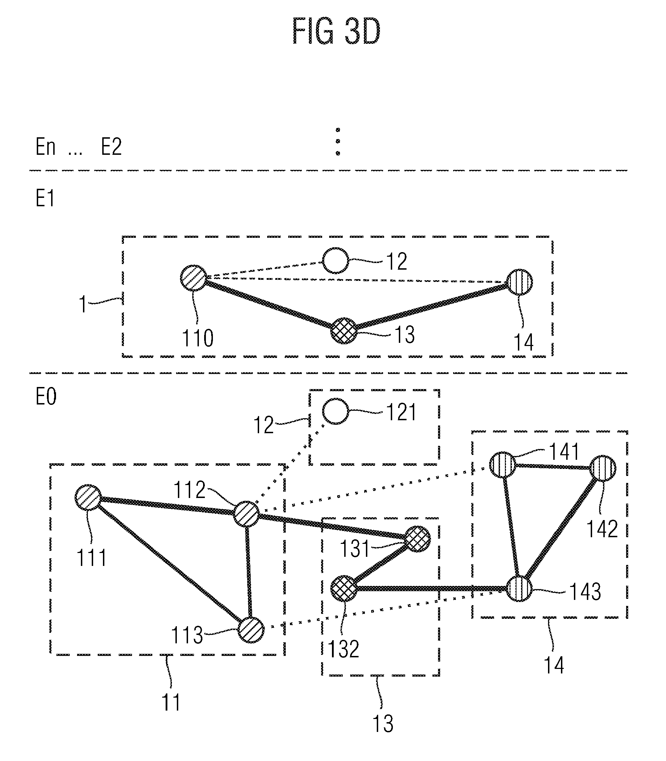

In Fig. 3 wird für eine Anfrage ausgeführte Abarbeitung eines Graphalgorithmus auf dem Graphen gemäß einem Ausführungsbeispiel der vorliegenden Erfindung gezeigt. Dabei wird der in Fig. 1 gezeigte hierarchische Graph als Grundlage verwendet. Der Graphalgorithmus zeigt beispielhaft die Suche nach einem kürzesten Pfad. Im Allgemeinen können verschiedene Such- oder Ermittlungsverfahren auf eine ähnliche, dem Fachmann ersichtliche Weise auf dem hierarchischen Graphen durchgeführt werden.

Fig. 3a zeigt einen ersten allgemeinen Schritt der Ermittlung eines kürzesten Pfades. Gemäß dem vorliegenden Beispiel sind die Kanten des hierarchischen Graphen entsprechend Kriterien einer Anfrage über die relevanten Abstraktionsebenen gewichtet. Die Gewichtung kann ähnlich zu dem oben ausgeführten Beispiel unter Verwendung der durch den Wissensrepräsentationsformalismus dargestellten Daten vollzogen werden. In dem ersten allgemeinen Schritt wurde der kürzeste Pfad zwischen den Knoten 110 und 140 zuerst auf der obersten für die Abfrage relevanten Abstraktionsebene E1 ermittelt. Der ermittelte Pfad wird in Fig. 3a mittels der durchgezogen und fett eingezeichneten Linien zwischen den Knoten 11, 13 und 14 hervorgehoben. Im Weiteren wird die Suche nun konkretisiert werden, wobei in den Unterebenen des hierarchischen Graphen nach Ereignissen gesucht wird, die dem Ergebnis der obersten für die Abfrage relevanten Ebene entsprechen.

Fig. 3b zeigt den nächsten Schritt der Ermittlung des kürzesten Pfades zwischen den Knoten 11 und 14. Dieser Schritt wird auf der unterhalb der Ebene E1 liegenden Ebene E0 durchgeführt. Es wird dabei zunächst nach einem kürzesten Pfad gesucht wird, der in dieser Ebene der Kante zwischen den Knoten 11 und 13 in der Ebene E1 entspricht. Es werden somit nur die Knoten und Kanten betrachtet, die mit den Untergraphen der Knoten 11 und 13 in Zusammenhang stehen. Mit dem Ermittlungsschritt des Ausführungsbeispiels der Fig. 3b wird der mit fett eingezeichneten Linien angegebene Pfad zwischen den Knoten 111, 112 und 131 ermittelt.

In Fig. 3c wird die oben angefangene Suche nach einem Pfad in der Ebene E0, der dem ermittelten Pfad in der oberen Ebene entspricht fortgesetzt. Hier wird auf dem Ergebnis der Fig. 3b aufgebaut und nach einem Pfad gesucht, welcher der Kante der Ebene E1 zwischen den Knoten 13 und 14 entspricht. Dieser Pfad besteht aus Kanten zwischen den Knoten 131, 132 und 143. Das Zwischenergebnis der in Fig. 3c dargestellten Ermittlung ist somit ein Pfad zwischen den Knoten 111, 112, 131, 132 und 143 auf der Ebene E0.

Ist der eigentliche Zielknoten der Knoten 142, so ist die Suche noch nicht abgeschlossen. Das endgültige Ergebnis ist in Fig. 3d dargestellt. Hier wurde der auf der Ebene E0 ermittelte Pfad um die Kante zwischen den Knoten 143 und 142 ergänzt.

An dieser Stelle ist der Suchvorgang abgeschlossen. Der ermittelte kürzeste Pfad ist ein Pfad zwischen den Knoten 11, 13 und 14 in der Ebene E1 und ein Pfad zwischen den Knoten 111, 112, 131, 132, 143 und 142 in der Ebene E0.

Dabei ist anzumerken, dass es auch die Möglichkeit besteht, die Abstraktionsstufen vorzugeben, die für eine Anfrage interessant sind. Das heißt, es müssen nicht alle Stufen eines Graphen berücksichtigt werden. Insgesamt wird die Suche auf einer oberen Stufe beginnen und einen abstrakten Rahmen für die Suchen in den nachfolgenden, für die Anfrage relevanten Unterebenen, wie oben beispielhaft dargestellt, bieten.

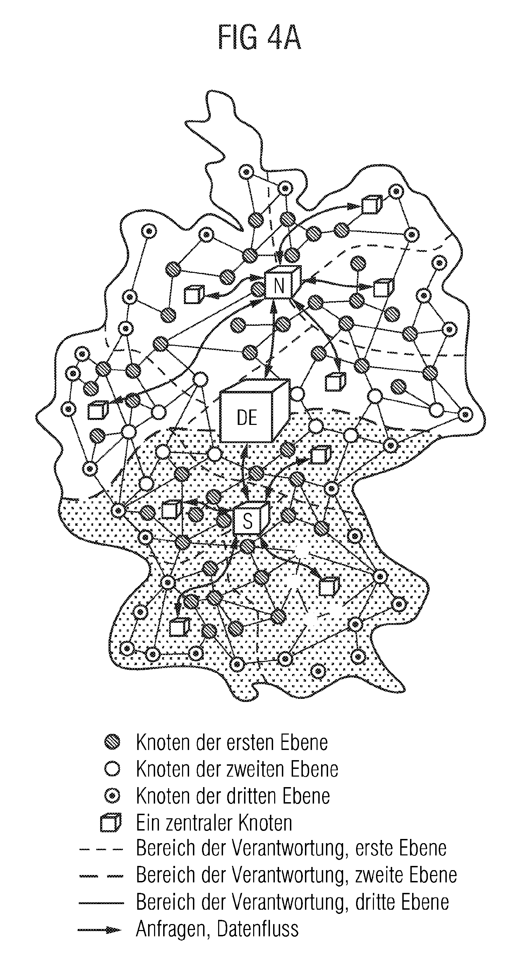

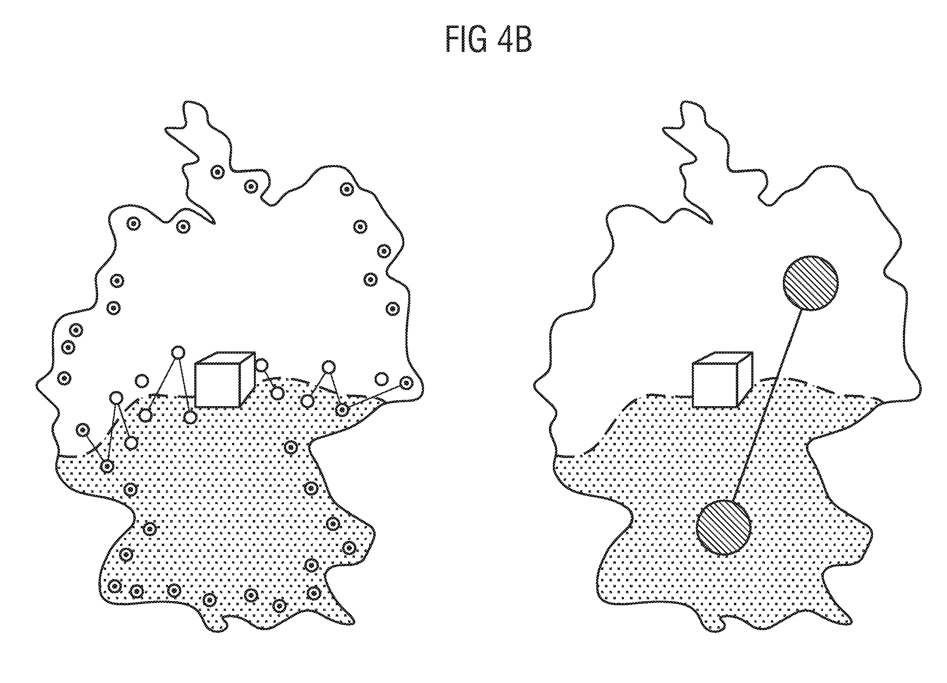

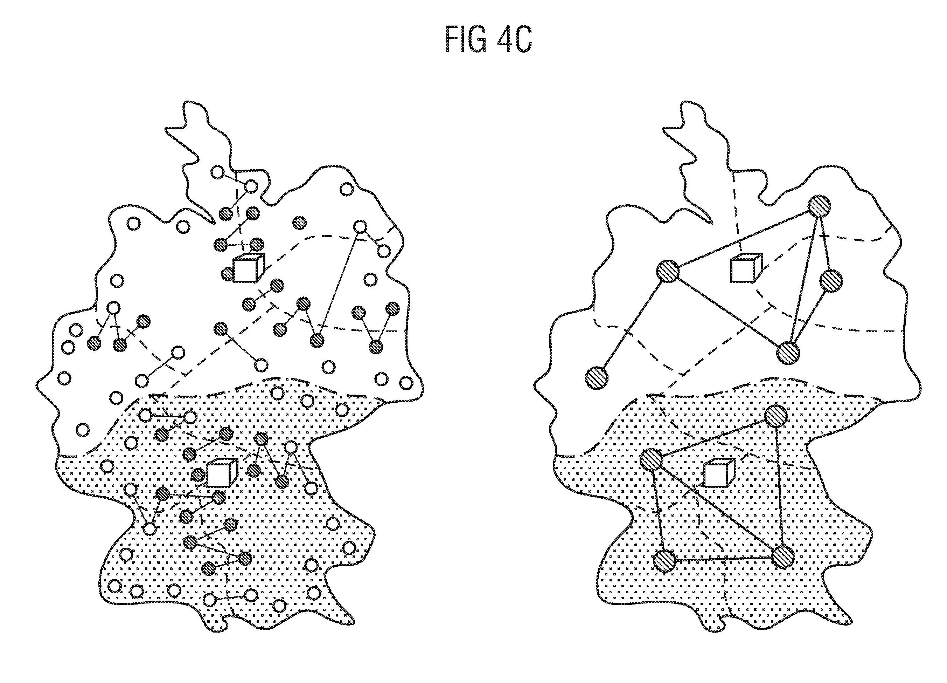

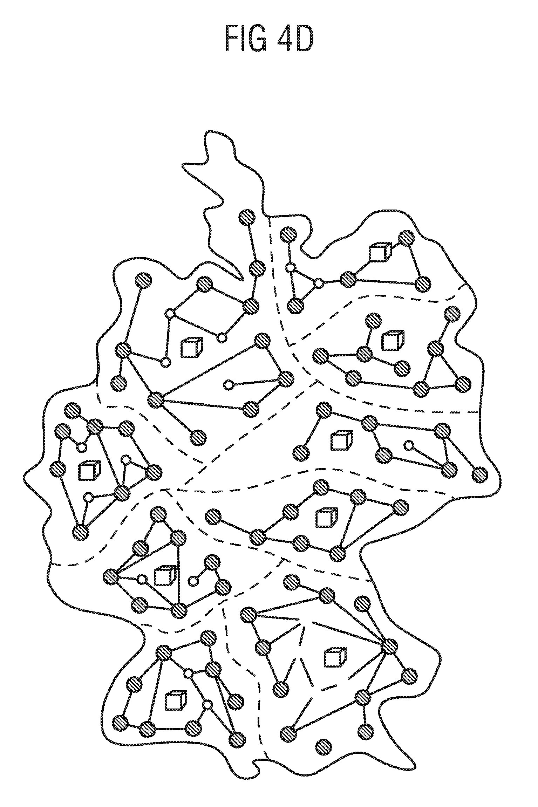

Fig. 4 stellt beispielhaft eine starke Vereinfachung des deutsche Schienennetzes dar, das als hierarchischer Graph gemäß der vorliegenden Erfindung modelliert ist. Die Fig. 4a zeigt eine zusammenfassende Sicht auf alle Abstraktionsebenen des deutschen Schienennetzes. Es werden dabei drei Abstraktionsebenen unterschieden, die in den nachfolgenden Zeichnungen der Fig. 4b, 4c und 4d detaillierter dargestellt sind. In der dritten Ebene der Fig. 4b, die die abstrakteste Ebene darstellt, ist nur der allgemeine zentrale Knoten DE des deutschen Schienennetzes angegeben, der ganz allgemein das süddeutsche und das norddeutsche Schienennetz koordiniert. In Fig. 4c wird die zweite Abstraktionsebene dargestellt, in welcher die Verwaltungszentren von Norddeutschland N und von Süddeutschland S dargestellt sind, die von dem allgemeinen zentralen Knoten DE verwaltet werden und die selbst die Bundesländerspezifischen Netze koordinieren. Die erste Ebene, die in Fig. 4d dargestellt ist, zeigt die Verwaltungszentren der Bundesländer und die dazugehörigen Schienenunternetze.

Obwohl die Erfindung oben mit Bezug auf die Ausführungsformen gemäß der Zeichnung erklärt wird, ist es ersichtlich, dass die Erfindung nicht auf diese beschränkt ist, sondern innerhalb des Bereichs der oben und in den anhängigen Ansprüchen offenbarten erfinderischen Idee modifiziert werden kann.

Es versteht sich zum Beispiel von selbst, dass es noch weitere Ausführungsformen geben kann, die den Grundsatz der Erfindung darstellen und äquivalent sind, und dass somit verschiedene Modifikationen ohne Abweichen vom Umfang der Erfindung implementiert werden können. So können verschiedene auf Graphen oder Wissensrepräsentationsformalismen bezogene Verfahren durchgeführt werden. Die Suche nach einem kürzesten Pfad ist lediglich als ein Beispiel von vielen zu sehen. So können zum Beispiel Anfragen nach Einheiten des Infrastrukturnetzes, die bestimmte Eigenschaften aufweisen oder nach in einem bestimmten Kontext (hinsichtlich bestimmter Kriterien) zusammenhängenden Einheiten des Infrastrukturnetzes gestellt werden.

## Patentansprüche

1. Verfahren zum Betreiben eines Infrastrukturnetzes, das die Schritte aufweist:
Bereitstellen eines hierarchischen Graphen, der das Infrastrukturnetz und räumliche Beziehungen von Einheiten des Infrastrukturnetzes abbildet, und
Bereitstellen eines Wissensrepräsentationsformalismus, wobei der Wissensrepräsentationsformalismus Daten zu dem Infrastrukturnetz erfasst, wobei die in dem Wissensrepräsentationsformalismus erfassten Daten mit Elementen des hierarchischen Graphen verbunden sind.

2. Verfahren nach Anspruch 1,
mit dem weiteren Verfahrensschritt:
Ausführen zumindest einer Anfrage in Bezug auf das Infrastrukturnetz unter Verwendung des hierarchischen Graphen und des Wissensrepräsentationsformalismus aufweist, wobei der hierarchische Graph aus einer Menge von Elementen, welche die Einheiten des Infrastrukturnetzes abbilden, aufgebaut ist.

3. Verfahren nach Anspruch 2,
wobei das Ausführen der zumindest einen Anfrage die Schritte aufweist:
Auswählen einer Teilmenge von Elementen aus der Menge von Elementen des hierarchischen Graphen, die für die zumindest eine Anfrage relevant sind, unter Verwendung des hierarchischen Graphen und/oder des Wissensrepräsentationsformalismus; und
Durchführen der zumindest einen Anfrage unter Verwendung der ausgewählten Teilmenge von Elementen und unter Verwendung des hierarchischen Graphen und/oder des Wissensrepräsentationsformalismus.

4. Vorrichtung zum Betreiben eines Infrastrukturnetzes mit einer ersten Datenhandhabungseinrichtung, die derart ausgebildet ist, einen hierarchischen Graphen, der das Infrastrukturnetz und räumliche Beziehungen von Einheiten des Infrastrukturnetzes abbildet, zu handhaben, und
mit einer zweiten Datenhandhabungseinrichtung, die derart ausgebildet ist, einen Wissensrepräsentationsformalismus zu handhaben, wobei der Wissensrepräsentationsformalismus ausgebildet ist, Daten zu dem Infrastrukturnetz zu erfassen und
wobei die in dem Wissensrepräsentationsformalismus erfassten Daten mit Elementen des hierarchischen Graphen verbunden sind.

5. Vorrichtung nach Anspruch 4,
mit einer Anfragenausführungseinrichtung, die dazu ausgebildet ist, zumindest eine Anfrage in Bezug auf das Infrastrukturnetz und unter Verwendung des hierarchischen Graphen und des Wissensrepräsentationsformalismus auszuführen, wobei der hierarchische Graph aus einer Menge von Elementen, welche die Einheiten des Infrastrukturnetzes abbilden, aufgebaut ist.

6. Vorrichtung nach Anspruch 5,
wobei die Anfragenausführungseinrichtung
- eine Auswahlvorrichtung, die ausgebildet ist, eine Teilmenge von Elementen aus der Menge von Elementen des hierarchischen Graphen, die für die zumindest eine Anfrage relevant sind, unter Verwendung des hierarchischen Graphen und/oder des Wissensrepräsentationsformalismus auszuwählen, und
- eine Durchführungseinrichtung, die ausgebildet ist, die zumindest eine Anfrage unter Verwendung der ausgewählten Teilmenge von Elementen und weiterhin unter Verwendung des hierarchischen Graphen und/oder des Wissensrepräsentationsformalismus durchzuführen, aufweist.

7. Infrastrukturnetz mit zumindest einer Vorrichtung nach einem der Ansprüche 4 bis 6 und mit Einheiten, die strukturelle Elemente und Verbindungen zwischen den strukturellen Elementen umfassen.

8. Datenstruktur für ein Verfahren zum Betreiben eines Infrastrukturnetzes mit einem hierarchischen Graphen und einem Wissensrepräsentationsformalismus,
wobei der hierarchische Graph ausgebildet ist, das Infrastrukturnetz und räumliche Beziehungen von Einheiten des Infrastrukturnetzes abzubilden, und
wobei der Wissensrepräsentationsformalismus ausgebildet ist, Daten zu dem Infrastrukturnetz zu erfassen, wobei die in dem Wissensrepräsentationsformalismus erfassten Daten mit Elementen des hierarchischen Graphen verbunden sind.

9. Computerprogramm, das eine Kodierung aufweist, die ausgebildet ist, Schritte des Verfahrens nach einem der Ansprüche 1 bis 3 auszuführen.

10. Computerprogramm nach Anspruch 9,
wobei das Computerprogramm auf einem Datenträger gespeichert ist.

11. Datenträger, der ein Computerprogramm nach Anspruch 9 aufweist.
